# EUROPEAN PATENT APPLICATION

(11) **EP 0 600 682 A1**
(43) Date of publication of application: **08.06.1994**
(21) Application number: 93309464.1
(22) Date of filing: 26.11.1993
(51) Int. Cl.: H04N 1/41, H04N 7/13

(54) **Image communication technique**

(30) Priority: 03.12.1992 US 984809
(71) Applicant: AT&T Corp., New York, NY 10013-2412 (US)
(72) Inventor: Bernstein, Lawrence, Short Hills, New Jersey 07078 (US)
(74) Representative: Buckley, Christopher Simon Thirsk

(57) **Abstract**

A compressed image (151) is transmitted by a server (10) to a client (30) along with a software module (153) which is executed by the client to produce a decompressed image (353).

## Description

### Background of the Invention

The present invention relates to image communications.

Visual images, particularly pictorial images, contain a great deal of redundant information. As a consequence, a large number of so-called image compression algorithms have been developed over the last quarter-century. These algorithms encode an image in such a way as to remove substantial amounts of the redundancy, thereby allowing an image to be stored and/or transmitted using far fewer bits than would be required to store or transmit the original, uncompressed image. A matching decompression algorithm is used to reconstruct the original image upon its retrieval from storage or its receipt from a transmission medium. Such techniques are used not only to remove the redundancy within an individual image, but also to remove the frame-to-frame redundancy that exists in moving, or "video," images.

No one algorithm is optimal for all situations. In particular, particular algorithms do a better job of compressing particular types of images. Moreover, inherent in particular classes of image compression/decompression algorithms is the loss of some of the original image information--typically resulting in a loss of resolution in the reconstructed image. As a general rule, the greater the degree of compression, the greater the loss of image information upon subsequent decompression. Thus, algorithms that would be useful when storing/transmitting pictures of hotels in Bermuda--where some loss of resolution might not be deemed objectionable--could not be used when the images are medical x-ray images, where the presentation of fine details is critical.

The present invention relates principally to compressed image transmission. In that context, it has been recognized that different types of images, compressed using different types of algorithms as just discussed, might be transmitted to a particular display terminal at different times. In order to properly decompress such images, the receiving terminal needs to determine, in the first instance, what decompression algorithm to use. To this end, software modules embodying the various possible decompression algorithms are stored in the receiving terminal. The particular decompression algorithm to be used is determined either a) from an identifying code that accompanies the transmitted compressed image, or b) via an analysis of the compressed image data, from which the compression algorithm that was used can be inferred.

### Summary of the Invention

There are drawbacks, I have recognized, with the above-outlined prior art approach. Firstly, it requires that any display terminal that might potentially receive a compressed image must be pre-provisioned with software implementing all of the decompression algorithms that might possibly be needed. This constitutes a major logistical problem in applications involving a large number of receiving terminals, such as a large corporate, governmental or university network, or image-based services accessed by consumers via dial-up links from their personal computers. A further problem arises as the state of the image compression/decompression art improves and it becomes desired to use the improved algorithms; obviously, an improved compression algorithm cannot be used unless the matching decompression algorithm has been installed in each receiving terminal.

The above and other problems are avoided in accordance with the present invention by transmitting to an image-receiving terminal, in association with the transmission of a compressed image, information embodying the decompression algorithm that is to be used to decompress it. In preferred embodiments, the information is transmitted in the form of executable program code that operates on the data representing the compressed image and provides, as output, the decompressed image.

Techniques are known in which information is sent along with a compressed image, such as an image-specific "codebook" which defines how the different values of received codewords representing the image are to be translated into respective different graphic patterns. In contradistinction to the present invention, however, such an approach does not involve the transmitting of information embodying a compression algorithm. Rather, in that prior art, the program code implementing the algorithm--which, quite simple, comprises the repetitively performed step of translating received codewords using the codebook--is pre-stored in the receiving terminal.

### Background of the Invention

FIG. 1 is a block diagram depicting an illustrative system in which the invention can be used;
FIG. 2 is a flowchart of steps that are carried out by a server and client within the system of FIG. 1 in implementing the invention; and
FIG. 3 shows an alternative for one of the steps shown in the flowchart of FIG. 2.

### Detailed Description

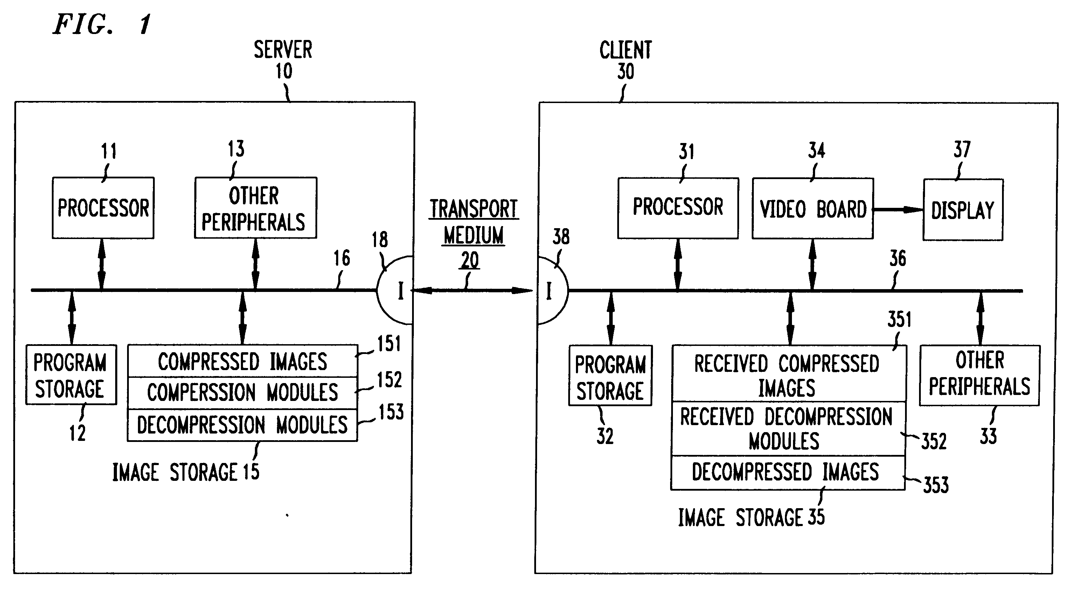

In the system of FIG. 1, a server 10 communicates with a client 30 via a transport medium 20. Server 10 is illustratively a host computer and client 30 is representative of one of many personal computers or workstations which communicate with the server. In one possible embodiment, transport medium 20 is a local area network (LAN) via which all of the clients are connected to server 10. In another embodiment, transport medium 20 is a dial-up telephone line via which client 30, specifically, communicates with server 10. Each other client served by server 10 would, in this case, communicate with server 10 via its own dial-up telephone line.

As seen in FIG. 1, server 10 includes a processor 11 which controls the server's overall operation under the control of programs stored in a memory denoted program storage 12. Another memory, denoted image storage 15, contains compressed images 151 which, from time to time, are communicated to client 30 in the course of a communication session. Storage 15 also contains compression modules 152, which are various executable software modules, each implementing a respective image compression algorithm. Modules 152 are executed by processor 11 in creating compressed images 151. Additionally, storage 15 contains decompresison modules 153, each of which is an executable software module which implements an image decompression algorithm corresponding to the compression algorithm implemented by a particular one of compression modules 152. An interface (I) 18 provides an appropriate gateway onto transport medium 20, and may be a modem, LAN access port, etc., as appropriate. The components just described are interconnected within the server via a bus 16, to which are also connected a myriad of other standard peripherals 13 (e.g., interrupt controllers, memories, etc.).

The structure of client 30 is similar. It includes a processor 31, program storage 32, image storage 35 (the contents of which are described below), interface 38, video board 34, and other peripherals 33, all interconnected via bus 36. Additionally, a CRT or other display 37 is driven directly from video board 34.

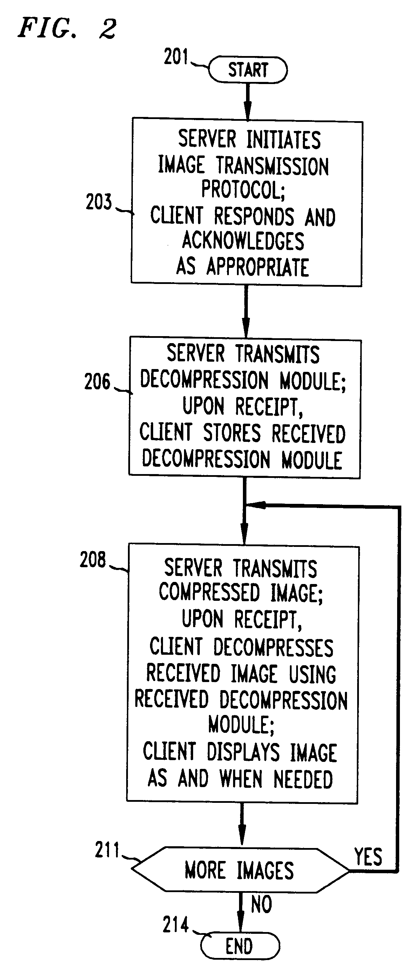

Referring now to FIG. 2, it may be assumed that server 10 and client 30 are in communication with one another in the course of executing some application involving the transmission of ones of the images 151 to client 30. At the point in time that the image transmission itself is to be initiated, as indicated at 201, image communication software stored in program storage 12 and 32 is executed. In particular, the image communication software within server 10 causes server 10 to initiate an image transmission protocol with client 30, as denoted at 203. The image communication software within client 30, in turn, responds to and acknowledges messages sent to it by server 10 pursuant to the protocol, as further denoted at 203.

At this point, the server and client are ready to, respectively, transmit and receive images in accordance with the invention. Specifically, as denoted at 206, server 10 transmits to client 30 a particular one of the decompression modules 153 which, concurrently, the latter stores in image storage 35 as denoted at 352. The particular decompression module transmitted is the one that is appropriate for decompressing the compressed image or images about to be transmitted.

Indeed, as indicated at 208, server 10 proceeds to transmit the first image, which client 30 stores in image storage 35, as denoted at 351. At an appropriate point thereafter--which may be during the course of the image transmission or after the entire image has been received and stored--client 30 decompresses the image by executing the previously received decompression algorithm to operate on the received compressed image. The resulting decompressed image is stored in image storage 35, as denoted at 353, from which it will be read at an appropriate point in time, as and when needed, into the video buffer controlled by video board 34 for ultimate presentation on display 37.

If more images that were compressed with the algorithm in question are to be transmitted, as tested at 211, steps 208 and 211 are repeated until there are no more images to be transmitted and the process ends, as indicated at 214.

The technique disclosed in my U.S. patent 4,555,774 issued November 26, 1985, hereby incorporated by reference, can be used to advantage in conjunction with the present invention. Specifically, image and other data transmission protocols typically transmit data in so-called blocks. Error control capabilities built in to the protocol cause blocks that were received in error to be retransmitted. Although ensuring accurate reception of the image, this approach may have the effect of delaying the time before which the image can begin to be presented on the display. Using the approach disclosed in my above-mentioned patent, however, a first block or other predefined portion of the compressed image can be transmitted without using any error control, and as soon as it is decompressed at the client, it is displayed on the client's display albeit with possible errors. The entire image, including the first block, can be, in the meantime, being transmitted using the standard error control protocol. The overall effect, then, is to shorten the time that a person viewing the display has to wait before seeing at least some portion of the image appear on the screen inasmuch as the delaying effects of error control do not affect the display of the first block. Since the psychology of an empty screen is to heighten subjective feelings of delay, this approach avoids or minimizes that effect.

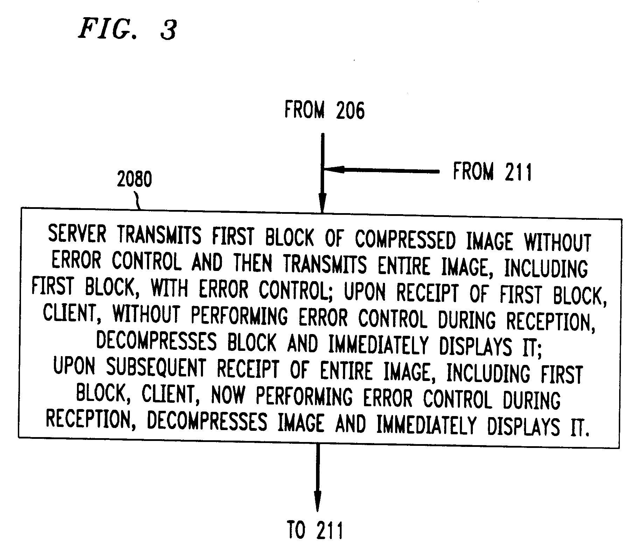

FIG. 3 shows a method step 2080 that would be used to replace step 208 of FIG. 2 in order to carry out this approach.

The foregoing discussion has proceeded on the implicit assumption that each client is capable of executing a particular one executable module implementing a particular decompression algorithm. This, however, may not be the case; the various clients may be from different vendors and/or operate under different operating systems. Thus, a module that executes on one of them may not be executable on another. Advantageously, however, the communications managed by the image communication software which, as just described, implements the steps shown in FIG. 2 may, advantageously, include the messages whereby the client may indicate to the server the type of machine that it is, thereby allowing the server to select, from among decompression modules 153, an appropriate executable module.

The foregoing merely illustrates the principles of the invention. For example, the invention is not only applicable to still images, but also to moving (video) images. Moreover, it is not limited to any particular client/server hardware or software structure or architecture.

Additionally, the decompresion module, i.e., the ASCII or other representation of the alphanumeric characters comprising the program code, might itself be compressed prior to transmission using a text compression algorithm for which an appropriate text decompression module is a) pre-installed in the client, or b) transmitted along with the compressed image and the compressed image decompression module. Indeed, such an approach could be implemented in a recursive way. That is, the text decompression module could itself be compressed prior to its transmission and the appropriate module for decompressing the compressed text decompression module could, again, be either pre-installed or transmitted, and so forth for as many levels of recursion as desired.

It will thus be appreciated that those skilled in the art will be able to devise numerous arrangements which, although not explicitly shown or described herein, embody the principles of the invention and are within their spirit and scope.

## Claims

1. A method of communicating image information from a server to a client, said method comprising the step of
transmitting from said server to said client an image that was compressed using a particular image compression algorithm,
CHARACTERIZED BY THE FURTHER STEPS OF
transmitting from said server to said client, concurrently with the transmission of said image, information containing an image decompression algorithm which corresponds to said compression algorithm,
receiving the transmitted compressed image and information at said client, and
decompressing the received image using the received algorithm information.

2. The invention of claim 1 wherein said information is in the form of an executable software module which implements said algorithm and wherein said decompressing step comprises the step of executing the received module within said client to operate on the received compressed image.

3. The invention of claim 2 wherein
in said transmitting and receiving steps, a first portion of said image is transmitted and received without error control and at least the balance of said image is transmitted and received with error control,
in said decompressing step, said first portion is decompressed substantially immediately upon the receipt thereof and said at least balance is decompressed substantially immediately upon the receipt thereof, and
said method includes the further step of presenting said portion on a display substantially immediately after it has been decompressed and thereafter presenting said at least balance on said display substantially immediately after it has been decompressed.

4. A method CHARACTERIZED BY
the step of transmitting from a client to a server a) an image that was compressed using a particular image compression algorithm, and b) information embodying an image decompression algorithm capable of decompressing said image.

5. The invention of claim 4 wherein said information comprises a software module which can be executed to decompress said image.

6. A method comprising the step of
receiving an image that was compressed using a particular image compression algorithm,
CHARACTERIZED BY THE FURTHER STEPS OF
receiving an executable software module implementing an image decompression algorithm which corresponds to said compression algorithm, and
executing the received module to operate on the received compressed image and thereby decompress the image.

7. The invention of claims 2 or 6 comprising the further step of
presenting the decompressed image on a display.

8. The invention of claim 6 wherein in said receiving step a first portion of said image is received without error control and at least the balance of said image is received with error control,
in said executing step said first portion is decompressed substantially immediately upon the receipt thereof and said at least balance is decompressed substantially immediately upon the receipt thereof, and
said method includes the further step of presenting said portion on a display substantially immediately after it has been decompressed and thereafter presenting said at least balance on said display substantially immediately after it has been decompressed.

9. Apparatus CHARACTERIZED BY
means (10) for transmitting over a transport medium an image that was compressed using a particular image compression algorithm and for further transmitting over said transport medium information containing an image decompression algorithm which corresponds to said compression algorithm,
means (351,352) for receiving the transmitted compressed image and information from said transport medium, and
means (31,32) for decompressing the received image using the received algorithm information.

10. The invention of claim 9 wherein said information is in the form of an executable software module which implements said algorithm and wherein said decompressing means executes the module to decompress the received compressed image.

11. Apparatus CHARACTERIZED BY
means (351,352) for receiving a) an image that was compressed using a particular image compression algorithm, and b) an executable software module implementing an image decompression algorithm which corresponds to said compression algorithm, and
means (31,32) for executing the received module to operate on the received compressed image to thereby decompress the image.

12. The invention of claims 10 and 11 further comprising means (34) for presenting the decompressed image on a display.
